# EUROPÄISCHE PATENTSCHRIFT

(11) **EP 1 170 553 B1**
(45) Veröffentlichungstag und Bekanntmachung des Hinweises auf die Patenterteilung: **08.02.2006**
(21) Anmeldenummer: 01112533.3
(22) Anmeldetag: 23.05.2001
(51) Int. Cl.: F24D 3/16

(54) **Kühldecke**
Cooling ceiling
Plafond réfrigerant

(30) Priorität: 06.07.2000 DE 20011751 U
(43) Veröffentlichungstag der Anmeldung: 09.01.2002
(73) Patentinhaber: AMF- Mineralplatten GmbH Betriebs KG, 94481 Grafenau (DE)
(72) Erfinder: Mayer, Alexander, 94481 Grafenau (DE)
(74) Vertreter: Pfenning, Meinig & Partner GbR

(56) Entgegenhaltungen:
- WO-A-98/11390
- CH-A- 329 292
- DE-A- 3 919 143
- DE-A- 4 137 753
- DE-A- 4 438 363
- DE-U- 9 003 490
- DE-U- 9 012 650
- NL-C- 1 016 946

## Beschreibung

Die vorliegende Erfindung bezieht sich auf ein Dekkenelement mit dem Räume beheizt oder gekühlt werden können. Derartige Deckenelemente werden überall dort eingesetzt, wo eine Decke eines Raumes formschön verkleidet werden soll und zugleich für die Temperierung des Raumes benutzt werden soll. Insbesondere ist dies bei der Sanierung von Altbauten häufig erforderlich.

Nach dem Stand der Technik werden zur Temperierung eines Raumes über die Deckenfläche in dem Zwischenraum zwischen der Decke und der abgehängten Deckenverkleidung Rohrsysteme geführt, die das Temperiermittel, d.h. das Kühlmittel oder eine Heizflüssigkeit transportieren.

Nachteilig hieran ist, daß die Kälte- bzw. Wärmeleistung zu einem großen Teil auch auf die Decke selbst übertragen wird, so daß der Wirkungsgrad einer derartigen Deckenkühlung bzw. Deckenheizung gering ist. Weiterhin ist es erforderlich, dass die aufzuwärmende bzw. abzukühlende Luft durch die abgehängte Deckenverkleidung hindurchströmen kann, um die entsprechenden Kühlrohre oder Heizrohre zu erreichen. Damit sind dem Design einer Deckenverkleidung Grenzen gesetzt.

Weiter aus dem Stand der Technik ist ein Deckenelement gemäß der Druckschrift WO 98/11390 bekannt. Diese Druckschrift zeigt Kühldeckenelemente aus einer Gipsplatte oder aus zwei übereinander angeordneten Gipsplatten. Zwischen die Gipsplatten oder auch in eine Gipsplatte integriert sind Kühlrohre eingebracht. Deckenwärts sind Wärmesperren vorgesehen. Ebenfalls bekannt aus dem Stand der Technik (DE 4 438 363 A) ist ein Wärmeaustausch-Deckenelement mit mäanderförmig angeordneten Wärmeaustauschrohren aus Sauerstoff-diffusions-dichten, flexiblen Kunststoffrohren. Ebenfalls bekannt aus dem Stand der Technik (DE 9 012 650 U) sind Deckenelemente mit einer Putzschicht und einer darüber angeordneten Wärmedämmschicht. In der Putzschicht sind hierbei schlaufenartig Rohrkanäle verlegt.

Aufgabe der vorliegenden Erfindung ist es daher, ein Deckenelement zur Verfügung zu stellen, mit dem die Decke eines Raumes formschön verkleidbar ist und mit dem bei geringem Energiebedarf eine gute Kühl- bzw. Heizleistung erzielt wird, wobei gleichzeitig eine einfache Montage und Wartung gewährleistet sein soll.

Diese Aufgabe wird durch das Deckenelement nach Anspruch 1 gelöst. Vorteilhafte Weiterbildungen des erfindungsgemäßen Deckenelements werden in den abhängigen Ansprüchen gegeben.

Das erfindungsgemäße Deckenelement weist eine Mineralfaserplatte auf, auf die eine Gipsplatte aufgebracht ist. Die Mineralfaserplatte ist im montierten Zustand deckenseitig angeordnet, während die Gipsplatte sich dem bedeckten Raum zuwendet. Die Gipsplatte weist mindestens eine in der Gipsplattenebene verlaufende Nut auf, in die ein Temperiermittelschlauch eingebracht ist. Dieser Temperiermittelschlauch besteht dabei aus flexiblem, sauerstoffdichtem Material. Erfindungsgemäß weist die Gipsplatte nun auf ihrer Vorderseite musterhafte Vertiefungen (Relief) auf, zwischen denen sich Stege bilden, wobei die Nut auf der Rückseite der Gipsplatte in die Stege eingefräst ist. Eine Nut ist somit, wie beschrieben, auf der der Mineralfaserplatte zugewandten Rückseite der Gipsplatte eingebracht (bspw. eingefräst). Es kann jedoch auch eine Nut auf der dem Raum zugewandten Vorderseite der Gipsplatte in die Gipsplatte eingebracht (bspw. eingefräst) sein.

Das erfindungsgemäße Deckenelement weist den Vorteil auf, dass das Temperiermittel, das durch den Temperiermittelschlauch fließt, über die Mineralfaserplatte deckenseitig wärmegedämmt ist. Dadurch treten nur geringe Verluste in Richtung der Wand auf und es resultiert ein geringer Energiebedarf bzw. eine hohe Effizienz für Kühlen und Heizen des Raumes. Da nur geringe Luftmengen bewegt werden, wird weiterhin die schädliche Luftzirkulation und Staubbelastung im Raum reduziert und insgesamt eine vergleichmäßigte Strahlungstemperatur der raumumschließenden Flächen erzielt.

Das erfindungsgemäße Deckenelement zeichnet sich insbesondere durch eine einfache Montage und einfache Wartung aus, da es lediglich montiert und auf der Rückseite der Temperiermittelschlauch, beispielsweise über Steckverbindungen, mit einer Temperiermittelzuleitung und Temperiermittelableitung verbunden wird. Das erfindungsgemäße Deckenelement ist dabei mit allen bekannten Warm- oder Kaltwassererzeugern oder Lüftungssystemen kombinierbar.

Das erfindungsgemäße Deckenelement zeichnet sich auch durch besonders gute akustische Eigenschafen aus, da die Gipsplatte und die Mineralfaserplatte eine hervorragende Schallabsorption, insbesondere Längsschalldämmung, ergeben.

Durch die Verwendung eines sauerstoffdichten Materials für den flexiblen Temperiermittelschlauch kann dieses erfindungsgemäße Deckenelement auch ohne weiteres mit Temperiermittelzu- und ableitungen aus Kupfer oder Stahl oder anderen Metallen kombiniert werden. Da im Temperiermittelschlauch kein Sauerstoff in das Temperiermittel eindringen kann, wird die Rostbildung der Kupfer- und Stahlleitung sowie ein daraus folgendes Verschlammen des gesamten Kühl- bzw. Heizsystems verhindert.

Das erfindungsgemäße Deckenelement ermöglicht beliebige Oberflächendesigns. Da eine Nut auf der der Mineralfaserplatte zugewandten Rückseite der Gipsplatte eingefräst ist, kann die Gipsplatte beliebige Oberflächendesigns tragen. Eine besonders ausgestaltete abgehängte Verblendung der Decke ist nicht mehr erforderlich. Da die Gipsplatte auf ihrer Sichtseite mustererzeugende Vertiefungen aufweist, ist die Nut in die entsprechend verbleibenden Stege eingebracht.

Wird auch eine Nut auf der Sichtseite in die Gipsplatte eingebracht, so ergibt sich eine besonders einfache Montage des Temperiermittelschlauchs. Denn dieser kann von dem Monteur selbst in die offenliegende Nut eingelegt werden. In diesem Falle ist es auch möglich, die Sichtseite nach Einlegen des Temperiermittelschlauches in die Nut mit einer Abdeckung, beispielsweise aus einer metallischen Lochplatte mit beliebigem Design, abzudecken.

Beim Deckenelement nach der Erfindung ist es auch möglich, die Nut in der der Temperiermittelschlauch liegt, zu verschließen. Dies kann z.B. mittels Gips oder einer Kunststoffmasse geschehen. Dadurch wird ein verbesserter Kontakt des Schlauches mit der Gipsplatte erreicht.

Das erfindungsgemäße Deckenelement zeichnet sich also dadurch aus, dass es eine Trennung der Funktion Heizen/Kühlen von den sonstigen raumlufttechnischen Anlagen, die sich zwischen dem Deckenelement und der Decke selbst befinden, ermöglicht, wobei die Kühlung bzw. Erwärmung im Wesentlichen nur in Richtung des Raumes erfolgt und dadurch Energieverluste vermieden werden.

Im Folgenden wird ein Beispiel eines erfindungsgemäßen Deckenelements beschrieben. Es zeigen
- Figur 1: eine Anordnung von erfindungsgemäßen Deckenelementen, wobei nicht alle Details der Deckenelemente gezeigt und beschrieben sind.
- Figur 2: ein nicht-erfindungsgemäßes Deckenelement und
- Figur 3: ein erfindungsgemäßes Deckenelement im Detail.

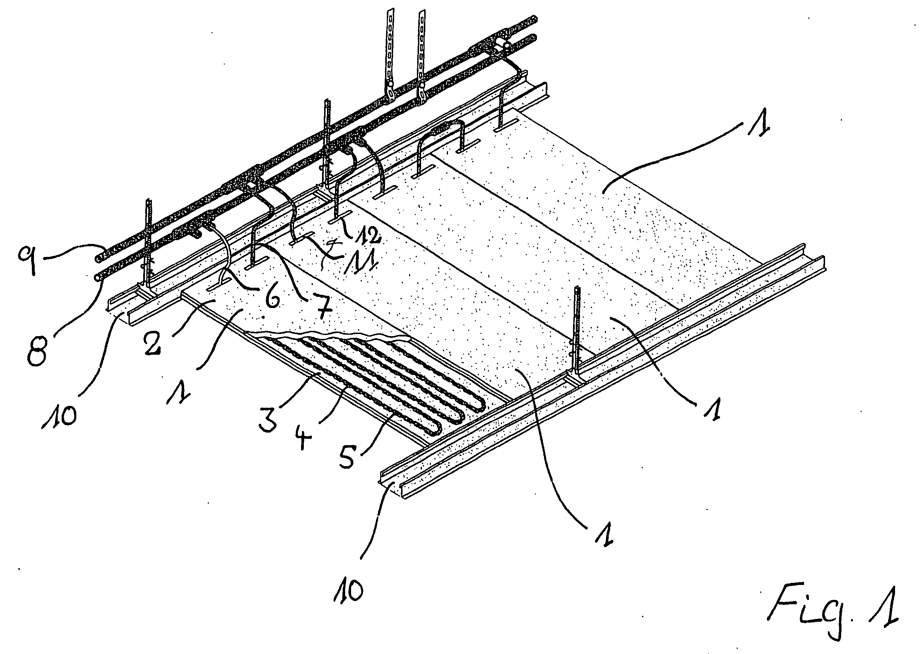

Figur 1 zeigt eine montierte Anordnung von erfindungsgemäßen Deckenelementen 1. Diese Deckenelemente 1 sind auf zwei gegenüberliegenden Seiten auf Aufhängungsschienen 10 gelagert, die ihrerseits an der Deckenkonstruktion befestigt sind. Die einzelnen Deckenelemente sind formschlüssig aneinander geschoben, sodass sich eine geschlossene abgehängte Anordnung von Deckenelementen ergibt. Diese Deckenelemente bestehen aus einer Mineralfaserplatte 2 und einer Gipsplatte 3, die als Verbund angeordnet sind. Auf der Rückseite der Gipsplatte 3 und abgedeckt durch die Mineralfaserplatte 2 befindet sich in der Ebene der Gipsplatte 3 eine Nut 4, in die eine Kühlschlange aus einem flexiblen, sauerstoffdichten Schlauch 5 eingelegt ist. dieser Schlauch 5 wird an seinen beiden Enden durch Öffnungen bzw. Bohrungen 11 und 12 in der Mineralfaserplatte 2 durch die Mineralfaserplatte 2 geführt und bildet dann auf der dem Raum abgewandten Seite der Mineralfaserplatte 2 einen Kühlmittelzufuhranschluss 6 und eine Kühlmittelableitung 7. diese beiden Anschlüsse 6 und 7 sind mit den entsprechenden Hauptversorgungsleitungen 8 bzw. 9 für das Kühlmittel bzw. für das Heizmittel verbunden. Insgesamt ergibt sich damit eine wandseitig gedämmte abgehängte Deckenelementkonstruktion, die zur Kühlung bzw. Heizung des Raumes verwendet werden kann.

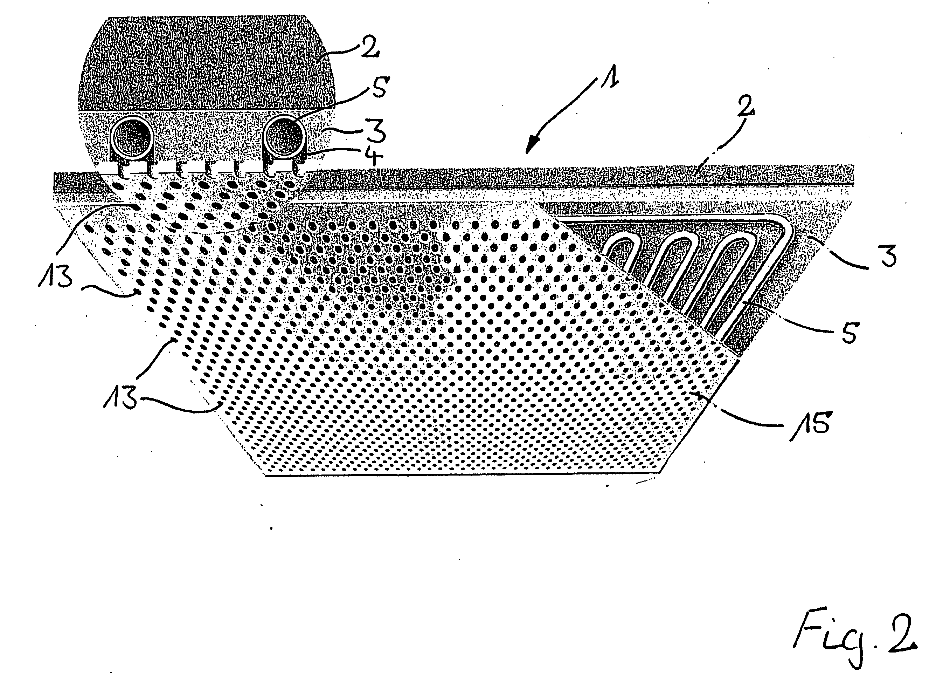

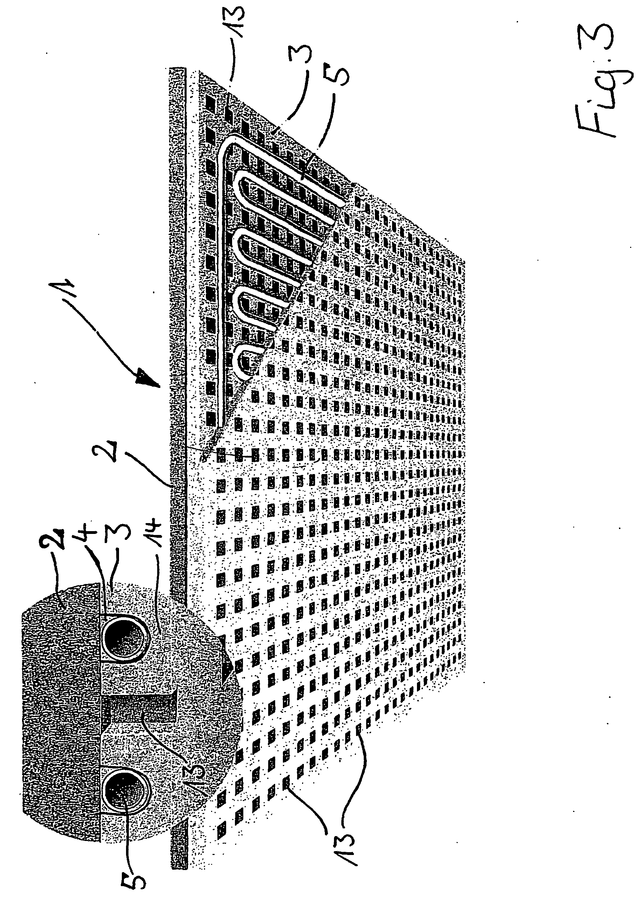

Figur 2 zeigt ein Deckenelement, wobei ein Ausschnitt mit vergrößerter Darstellung des Deckenelementes ebenfalls eingezeichnet ist. Bei Figuren 2 und auch im Folgenden Figur 3 sind ähnliche Elemente mit ähnlichen Bezugszeichen versehen, sodass deren Beschreibung gegebenenfalls weggelassen wird. Das Deckenelement 1 in Figur 2 besitzt wiederum eine Mineralfaserplatte 2, auf die eine Gipsplatte 3 aufgebracht ist. Sichtseitig ist in die Gipsplatte 3 eine Nut 4 eingefräst, in die ein flexibler, sauerstoffdichter Temperiermittelschlauch 5 eingelegt ist. Dieser verläuft mäanderförmig durch die Gipsplatte und dient zur Kühlung oder Aufheizung der Gipsplatte bzw. der daran entlangströmenden Luft. Sichtseitig ist die Gipsplatte dann weiterhin durch eine Metalllochplatte 15 verblendet, sodass die Gipsplatte mit ihrer Kühlmittelleitungsanordnung vom Raum her nicht gesehen werden kann. Ein derartiges in Figur 2 dargestelltes Deckenelement ist sehr leicht zu montieren und besitzt aufgrund der wandseitigen Dämmung durch die Mineralfaserplatte 2 hervorragende Schall- und Wärmeisolationseigenschaften.

Figur 3 zeigt ein erfindungsgemäßes Deckenelement 1 mit einer Mineralfaserplatte 2 und einer Gipsplatte 3 im Detail. Die Gipsplatte selbst ist sichtseitig so strukturiert, dass sich ein optisch ansprechender Eindruck ergibt. Denn sie trägt auf ihrer Sichtseite eine ansprechende Gipsoberfläche, die durch ein regelmäßiges Muster von rechteckigen Vertiefungen 13 durchbrochen wird. Zwischen diesen Vertiefungen 13 bleiben Stege 14 stehen.

Auf der der Mineralfaserplatte 2 zugewandten Rückseite der Gipsplatte 3 ist in die Gipsplatte eine Nut 4 eingefräst. Diese Nut verläuft vorzugsweise in den Stegen 14, so daß sie vollständig durch die Gipsplatte sichtseitig bedeckt ist. In die Nut ist ein flexibler, sauerstoffundurchlässiger Temperiermittelschlauch eingelegt, mit dem die Gipsplatte gekühlt oder erwärmt werden kann. Der Kühlmittelschlauch ist wandseitig durch die Mineralfaserplatte 2 abgedeckt und gedämmt.

Bei einem derartigen, wie in Figur 3 dargestellten Deckenelement, ist keine weitere sichtseitige Verblendung erforderlich, da dieses eine qualitativ sehr hochwertige und optisch ansprechende Oberfläche aufweist.

Insgesamt ist durch die erfindungsgemäßen Deckenelemente die Möglichkeit gegeben, auf einfache und kostengünstige Weise mit geringen Energieverlusten eine Deckenkühlung bzw. Deckenheizung zu realisieren.

## Patentansprüche

1. Deckenelement mit einer Mineralfaserplatte mit einer Vorderseite und einer Rückseite, mit einer Gipsplatte mit einer Vorderseite und einer Rückseite, wobei die Rückseite der Gipsplatte mit der Vorderseite der Mineralfaserplatte formschlüssig verbunden ist und in die Gipsplatte auf ihrer Vorderseite und/oder auf ihrer Rückseite mindestens eine in der Plattenebene verlaufende Nut eingebracht ist sowie
mit einem Temperiermittelschlauch aus flexiblem, sauerstoffdichtem Material, der längs der Nut in die Nut eingelegt ist,
wobei die Gipsplatte auf ihrer Vorderseite musterhafte Vertiefungen aufweist, zwischen denen sich Stege bilden, und wobei die Nut auf der Rückseite der Gipsplatte in die Stege eingefräst ist.

2. Deckenelement nach dem vorhergehenden Anspruch, **dadurch gekennzeichnet, daß** die Vertiefungen ein regelmäßiges Lochmuster bilden.

3. Deckenelement nach einem der beiden vorhergehenden Ansprüche, **dadurch gekennzeichnet, daß** die Vertiefungen einen rechteckigen, quadratischen oder runden Querschnitt aufweisen.

4. Deckenelement nach einem der vorhergehenden Ansprüche, **dadurch gekennzeichnet, daß** die Mineralfaserplatte und gegebenenfalls die Gipsplatte jeweils eine senkrecht zur Plattenebene verlaufende Bohrung zwischen der Rückseite der Mineralfaserplatte und der Nut aufweist, die mit dem Anfang bzw. dem Ende der Nut in Verbindung steht.

5. Deckenelement nach einem der vorhergehenden Ansprüche, **dadurch gekennzeichnet, daß** der Temperiermittelschlauch mit seinen beiden Enden durch die Bohrung auf die Rückseite der Mineralfaserplatte geführt ist.

6. Deckenelement nach einem der vorhergehenden Ansprüche, **dadurch gekennzeichnet, daß** an jedem Ende des Temperiermittelschlauchs eine Steckverbindung angeordnet ist.

7. Deckenelement nach einem der vorhergehenden Ansprüche, **dadurch gekennzeichnet, daß** die Nut in der Gipsplatte mäanderförmig oder in Schlaufen verläuft.

8. Deckenelement nach einem der vorhergehenden Ansprüche, **dadurch gekennzeichnet, daß** die Vorderseite der Gipsplatte mit einer Abdeckplatte abgedeckt ist.

9. Deckenelement nach dem vorhergehenden Anspruch, **dadurch gekennzeichnet, daß** die Abdeckplatte eine Lochplatte ist.

10. Deckenelement nach dem vorhergehenden Anspruch, **dadurch gekennzeichnet, daß** die Abdeckplatte ein regelmäßiges Lochmuster aufweist.

11. Deckenelement nach einem der drei vorhergehenden Ansprüche, **dadurch gekennzeichnet, daß** die Abdeckplatte die Ränder der Gipsplatte und/oder der Mineralfaserplatte an zumindest zwei einander gegenüberliegenden Seiten umgreift.

12. Deckenelement nach dem vorhergehenden Anspruch, **dadurch gekennzeichnet, daß** die Gipsplatte und/oder die Mineralfaserplatte an zumindest zwei einander gegenüberliegenden Seiten eine seitliche Längsnut aufweist, in die die Abdeckplatte zur Halterung eingreift.

13. Deckenelement nach einem der Ansprüche 8 bis 12, **dadurch gekennzeichnet, daß** die Abdeckplatte aus Metall ist.

14. Deckenelement nach einem der vorhergehenden Ansprüche, **dadurch gekennzeichnet, daß** die Nut in der der Temperiermittelschlauch liegt, verschlossen ist.

## Revendications

1. Elément de plafond comprenant un panneau de fibres minérales ayant une face avant et une face arrière, et comprenant un panneau de plâtre comprenant une face avant et une face arrière, la face arrière du panneau de plâtre étant reliée par conjugaison des formes à la face avant du panneau de fibres minérales, et au moins une rainure s'étendant dans le plan du panneau étant aménagée dans la face avant et/ou dans la face arrière du panneau de plâtre,
ainsi qu'un tuyau flexible de fluide caloriporteur qui est fait d'une matière flexible, imperméable à l'oxygène, et qui est inséré dans la rainure en longeant la rainure,
le panneau de plâtre comportant, à sa face avant, des cavités répétées selon un dessin, entre lesquelles sont formées des nervures, et la rainure étant fraisée dans les nervures, à la face arrière du panneau de plâtre.

2. Elément de plafond selon la revendication précédente, **caractérisé en ce que** les cavités forment un dessin régulier de perforations.

3. Elément de plafond selon l'une des deux revendications précédentes, **caractérisé en ce que** les cavités présentent une section transversale rectangulaire, carrée ou ronde.

4. Elément de plafond selon l'une des revendications précédentes, **caractérisé en ce que** le panneau de fibres minérales et, le cas échéant, le panneau de plâtre, comportent chacun un perçage s'étendant perpendiculairement au plan du panneau, entre la face arrière du panneau de fibres minérales et la rainure, le perçage communiquant avec le point de départ et/ou le point d'arrivée de la rainure.

5. Elément de plafond selon l'une des revendications précédentes, **caractérisé en ce que** le flexible de fluide caloriporteur passe, avec ses deux bouts, à travers le perçage ménagé dans la face arrière du panneau de fibres minérales.

6. Elément de plafond selon l'une des revendications précédentes, **caractérisé en ce qu'**un système de raccordement à emboîtement mâle-femelle est aménagé à chaque extrémité du flexible de fluide caloriporteur.

7. Elément de plafond selon l'une des revendications précédentes, **caractérisé en ce que** la rainure parcourt le panneau de plâtre en forme de méandres ou de boucles.

8. Elément de plafond selon l'une des revendications précédentes, **caractérisé en ce que** la face avant du panneau de plâtre est recouverte par un panneau d'habillage.

9. Elément de plafond selon la revendication précédente, **caractérisé en ce que** le panneau d'habillage est un panneau perforé.

10. Elément de plafond selon la revendication précédente, **caractérisé en ce que** le panneau d'habillage présente un dessin de perforation régulier.

11. Elément de plafond selon l'une des trois revendications précédentes, **caractérisé en ce que** le panneau d'habillage entoure les bords du panneau de plâtre et/ou du panneau de fibres minérales sur au moins deux côtés mutuellement opposés.

12. Elément de plafond selon la revendication précédente, **caractérisé en ce que** le panneau de plâtre et/ou le panneau de fibres minérales présente, sur au moins deux côtés mutuellement opposés, une rainure longitudinale latérale dans laquelle s'engage le panneau d'habillage en vue de sa fixation.

13. Elément de plafond selon l'une des revendications 8 à 12, **caractérisé en ce que** le panneau d'habillage est en métal.

14. Elément de plafond selon l'une des revendications précédentes, **caractérisé en ce que** la rainure, dans laquelle est disposé le flexible de fluide caloriporteur, est fermée.

## Claims

1. Ceiling element comprising a mineral fibre board having a front side and a rear side, comprising a plasterboard having a front side and a rear side, the rear side of the plasterboard being positively connected to the front side of the mineral fibre board and in the front side and/or on the rear side of the plasterboard at least one groove being made, which runs in the plane of the board, and
comprising a tempering agent hose made of flexible, oxygen-tight material, which, along the length of the groove, is inserted in the groove,
the plasterboard on its front side having patterned depressions, between which webs are formed, and the groove on the rear side of the plasterboard being milled in the webs.

2. Ceiling element according to the preceding claim, **characterized in that** the depressions form a regular hole pattern.

3. Ceiling element according to one of the two preceding claims, **characterized in that** the depressions have a rectangular, square or round cross section.

4. Ceiling element according to one of the preceding claims, **characterized in that** the mineral fibre board and, where appropriate, the plasterboard respectively has a bore, running perpendicular to the plane of the board, between the rear side of the mineral fibre board and the groove, which bore connects to the beginning or the end of the groove.

5. Ceiling element according to one of the preceding claims, **characterized in that** the tempering agent hose is guided by its two ends through the bore onto the rear side of the mineral fibre board.

6. Ceiling element according to one of the preceding claims, **characterized in that** at each end of the tempering agent hose there is disposed a plug connection.

7. Ceiling element according to one of the preceding claims, **characterized in that** the groove in the plasterboard runs in a meandering pattern or in loops.

8. Ceiling element according to one of the preceding claims, **characterized in that** the front side of the plasterboard is covered with a cover plate.

9. Ceiling element according to the preceding claim, **characterized in that** the cover plate is a perforated plate.

10. Ceiling element according to the preceding claim, **characterized in that** the cover plate has a regular hole pattern.

11. Ceiling element according to one of the three preceding claims, **characterized in that** the cover plate embraces the margins of the plasterboard and/or of the mineral fibre board on at least two mutually opposite sides.

12. Ceiling element according to the preceding claim, **characterized in that** the plasterboard and/or the mineral fibre board has, on at least two mutually opposite sides, a lateral longitudinal groove in which the cover plate engages for holding purposes.

13. Ceiling element according to one of Claims 8 to 12, **characterized in that** the cover plate is made of metal.

14. Ceiling element according to one of the preceding claims, **characterized in that** the groove in which the tempering agent hose lies is sealed.
